(19)

**Europäisches Patentamt**
**European Patent Office**
**Office européen des brevets**

(11) **EP 3 354 938 A1**

(12) **EUROPEAN PATENT APPLICATION**

(43) Date of publication:
**01.08.2018 Bulletin 2018/31**

(51) Int Cl.:
*F16H 57/08* $^{(2006.01)}$　　*F16H 1/28* $^{(2006.01)}$

(21) Application number: **17153237.7**

(22) Date of filing: **26.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Google LLC**
**Mountain View, CA 94043 (US)**

(72) Inventors:
• **DOBLACK, Shelomon**
 **Mountain View, CA California 94043 (US)**
• **ALBONICO, Marcus**
 **Mountain View, CA California 94043 (US)**

(74) Representative: **Boult Wade Tennant**
 **Verulam Gardens**
 **70 Gray's Inn Road**
 **London WC1X 8BT (GB)**

(54) **PLANETARY GEAR TRAIN**

(57)　A planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear.

FIG. 1

## Description

BACKGROUND

A contemporary building is commonly heated by a central heating system. A central heating system is characterized by generation of heat in one room of the building and distribution of the generated heat to other rooms of the building. The heat is typically distributed by air forced through ductwork, by water running through pipes, or by steam flowing through pipes. The heat is generated by a heat generator. The heat generator can be a furnace, a burner, a heater, a boiler, or the like. Fuel for the heat generator can be natural gas, heating oil, kerosene, coal, peat, wood, biofuel, or the like. In some cases, the heat generator can use more than one type of fuel.

A thermostat is used to sense a temperature within the building and to use the sensed temperature as feedback to control the heat generator. For example, if the sensed temperature is greater than a setpoint temperature of the thermostat, then the thermostat changes an operating state of the heat generator from on to off. Conversely, if the sensed temperature is less than the setpoint temperature of the thermostat, then the thermostat changes the operating state of the heat generator from off to on. However, limiting control of the heat generator merely to changing the operating state often results in an underdamped control system in which gradients of thermal energy are produced within the building. For example, before the operating state of the heat generator changes from on to off, temperatures at some locations can be greater than the temperature sensed by the thermostat. Similarly, before the operating state of the heat generator changes from off to on, temperatures at some locations can be less than the temperature sensed by the thermostat. Such an underdamped control system can result in a level of comfort of people within the building that is less than what might otherwise be realized and can waste fuel.

Particularly in countries located in temperate climate zones, fuel consumed by central heating systems is a significant portion of all fuel consumed. For at least this reason, the European Commission issued Regulation No. 813/2013 on August 2, 2013. This regulation states that certain heat generators, placed in the market and/or put into service after September 26, 2015, must meet specific requirements with respect to efficiency. Manufacturers of heat generators have pursued various strategies to increase efficiency. Among these strategies have been efforts to better use the sensed temperature as feedback to control the heat generator. Rather than merely changing the operating state of the heat generator, the sensed temperature can be used to modulate operations of various components of the heat generator. For example, a position of a fuel valve of the heat generator and/or a speed of a blower of the heat generator can be incrementally controlled. In this manner, the overall control of the heat generator can approach that of a critically damped control system and thermal energy can be more uniformly distributed within the building. In comparison with a central heating system that has a conventional control system, a central heating system that has a control system that modulates operations of various components of the heat generator can improve the level of comfort of people within the building and can result in more efficient consumption of fuel.

BRIEF SUMMARY

According to an implementation of the disclosed subject matter, a planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear.

According to an implementation of the disclosed subject matter, a valve actuation system can include a planetary gear train, a first coupling, and a second coupling. The planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear. The first coupling can be connected to the second internally toothed gear and configured to be connected to a stem of a valve. The second coupling can be connected to the sun gear and configured to be connected to a mechanism. The mechanism can be configured to convert energy into a rotational motion.

According to an implementation the disclosed subject matter, a heat exchange system can include a heat exchanger and a valve. The valve can be connected to a port of the heat exchanger. The valve can have a valve actuator. The valve actuator can include a planetary gear train. The planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear.

Additional features, advantages, and embodiments of the disclosed subject matter are set forth or apparent from consideration of the following detailed description, drawings, and claims. Moreover, it is to be understood that both the foregoing summary and the following detailed description are illustrative and are intended to provide further explanation without limiting the scope of the claims.

BRIEF DESCRIPTION OF THE DRAWINGS

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.

FIG. 1 is a diagram illustrating a top view of a first stage of an example of a planetary gear train according to the disclosed subject matter.

FIG. 2 is a diagram illustrating a top view of a second stage of the example of the planetary gear train according to the disclosed subject matter.

FIG. 3 includes diagrams illustrating side views of gears included in the example of the planetary gear train illustrated in FIGS. 1 and 2.

FIG. 4 is a diagram illustrating a perspective view of an example of a valve actuation system according to the disclosed subject matter.

FIG. 5 is a diagram of an environment of an example configuration of a heat exchange system according to the disclosed subject matter.

FIG. 6 is a diagram of an environment of another example configuration of the heat exchange system according to the disclosed subject matter.

FIG. 7 is a block diagram of an example of a premises management device.

FIG. 8 is a block diagram of an example of a premises management system.

FIG. 9 is a block diagram of an example of a computing device suitable for implementing certain devices illustrated in FIGS. 5 through 8.

DETAILED DESCRIPTION

A contemporary building can be heated by a central heating system. A central heating system can be characterized by generation of heat in one room of the building and distribution of the generated heat to other rooms of the building. The heat can be distributed by air forced through ductwork, by water running through pipes, or by steam flowing through pipes. The heat can be generated by a heat generator. The heat generator can be a furnace, a burner, a heater, a boiler, or the like. Fuel for the heat generator can be natural gas, heating oil, kerosene, coal, peat, wood, biofuel, or the like. In some cases, the heat generator can use more than one type of fuel. In a central heating system in which heat is distributed by water running through pipes or by steam flowing through pipes, one or more of the pipes can be connected to one or more heat exchangers located in one or more rooms of the building. A radiator can be an example of a heat exchanger. A heat exchanger can be a device used to transfer heat from a first fluid to a second fluid. The first fluid can be the water running through the pipes or the steam flowing through the pipes. The second fluid can be air in a room in which the heat exchanger is located.

Manufacturers of central heating systems have pursued various strategies to increase efficiency. Among these strategies have been efforts to better use a temperature, sensed by a thermostat, as feedback to control a heat generator. Rather than merely changing an operating state of the heat generator, the sensed temperature can be used to modulate operations of various components of the heat generator. For example, a position of a fuel valve of the heat generator and/or a speed of a blower of the heat generator can be incrementally controlled. Additionally, according to aspects disclosed herein, the sensed temperature can be used as feedback to control a rate at which heat is transferred, by a heat exchanger, from a first fluid to a second fluid. For example, the sensed temperature can be used to incrementally control a position of a valve connected to a port of the heat exchanger. The valve can throttle flow of the first fluid through the heat exchanger. In this manner, the overall control of a central heating system can approach that of a critically damped control system and thermal energy can be more uniformly distributed within the building. In comparison with a central heating system that has a conventional control system, a central heating system that has a control system that modulates operations of various components of the heat generator, controls the rate at which heat is transferred by the heat exchanger, or both can improve the level of comfort of people within the building and can result in more efficient consumption of fuel.

A first mechanism can be used to control the position of the valve connected to the port of the heat exchanger. The first mechanism can configured to convert energy into a rotational motion. For example, the first mechanism can be a motor. A valve actuator can be used to couple the first mechanism (e.g., motor) to a stem of the valve. Optionally, the valve actuator can include a second mechanism. The second mechanism can be configured to be coupled to the stem of the valve. The second mechanism can be configured to convert the rotational motion to a linear motion. The linear motion can be applied to the stem of the valve. For example, the second mechanism can be a screw, a lead screw, a linkage, a rack and pinion actuator, a prismatic joint, a cam follower, the like, or any combination of the foregoing. Because the space available for the first mechanism and the valve actuator can be rather small (e.g., about 100 millimeters x 50 millimeters x 50 millimeters), the first mechanism used to control the position of the valve can be comparably small. The torque produced by such a first mechanism can be less than the torque needed to rotate the second mechanism (or the stem of the valve). For at least this reason, the valve actuator can include a gear train. The gear train can be used to convert a high speed and a low torque produced by the first mechanism to a low speed and a high torque applied to the second mechanism (or the stem of the valve). A speed conversion ratio ($N_{out}/N_{in}$) realized by a gear train can be proportional to a quotient equal to a number of teeth of a gear to which an input speed can be applied ($t_i$) divided by a number of teeth of a gear from which an output speed can be received ($t_o$). Similarly, a torque conversion ratio ($\tau_{out}/\tau_{in}$) realized by the gear train can be proportional to a quotient equal to a number of teeth of a gear from which an output torque can be received ($t_o$) divided by a number of teeth of a gear to which an input torque can be applied ($t_i$). In this manner, the torque applied to the second mechanism (or the stem of the valve) can be equal to or greater than the torque needed to rotate the second mechanism (or the stem of the valve). Again, because the space available for the first mechanism and the valve actuator can be rather small, the valve actuator can be comparably small.

Aspects disclosed herein describe a gear train that can occupy a space sufficiently small enough so that the gear train can be used in a valve actuator for a valve for a heat exchanger of a central heating system. The gear train can be a planetary gear train. The planetary gear train can include a sun gear, a first internally toothed gear, a second internally toothed gear, and one or more planetary gears. The one or more planetary gears can be one or more compound gears. A compound gear can include a first gear connected to a second gear in such a manner that the first gear and the second gear rotate about a common axis at the same angular speed. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear.

Aspects disclosed herein describe a valve actuation system that can occupy a space sufficiently small enough for a valve for a heat exchanger of a central heating system. The valve actuation system can include a planetary gear train, a first coupling, and a second coupling. The planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear. The first coupling can be connected to the second internally toothed gear and configured to be connected to a stem of the valve. The second coupling can be connected to the sun gear and configured to be connected to a first mechanism. The first mechanism can be configured to convert energy into a rotational motion.

Aspects disclosed herein describe a heat exchange system. The heat exchange system can include a heat exchanger and a valve. The valve can be connected to a port of the heat exchanger. The valve can have a valve actuator. The valve actuator can include a planetary gear train. The planetary gear train can include a sun gear, a first internally toothed gear, a second internally toothed gear, and one or more planetary gears. The one or more planetary gears can be one or more compound gears. The one or more compound gears can have one or more first gears and one or more second gears. Teeth of the one or more first gears can be directly meshed with teeth of the sun gear and with teeth of the first internally toothed gear. Teeth of the one or more second gears can be directly meshed with teeth of the second internally toothed gear.

A module of a gear can be a quotient equal to an average diameter (D), of a circumference of the gear having teeth, divided by a number of teeth (t) of the gear. If the module of a first gear is equal to the module of a second gear, then the teeth of the first gear can directly mesh with the teeth of the second gear so that a rotation of the first gear can be transferred to the second gear. Teeth of a first gear can be considered to be directly meshed with teeth of a second gear if the first gear is engaged with the second gear without a third gear in between the first gear and the second gear.

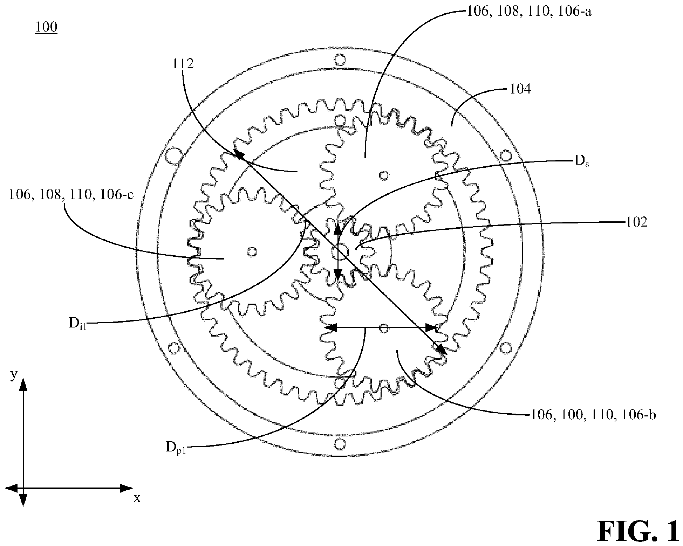

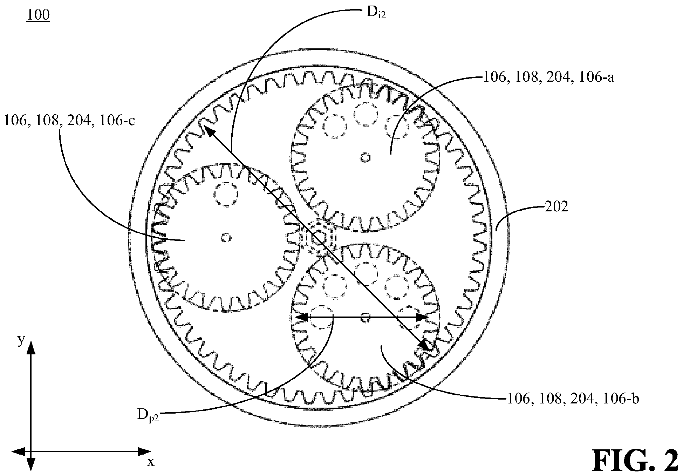

FIG. 1 is a diagram illustrating a top view of a first stage of an example of a planetary gear train 100 according to the disclosed subject matter. FIG. 2 is a diagram illustrating a top view of a second stage of the example of the planetary gear train 100 according to the disclosed subject matter. The planetary gear train 100 can include a sun gear 102, a first internally toothed gear 104, a second internally toothed gear 202, and one or more planetary gears 106. The one or more planetary gears 106 can include at least three planetary gears, for example, a planetary gear 106-a, a planetary gear 106-b, and a planetary gear 106-c. The one or more planetary gears 106 can be one or more compound gears 108. For example, the one or more compound gears 108 can have one or more first gears 110 and one or more second gears 204. Teeth of the one or more first gears 110 can be directly meshed with teeth of the sun gear 102 and with teeth of the first internally toothed gear 104. Teeth of the one or more second gears 204 can be directly meshed with teeth of the second internally toothed gear 202. Optionally, the planetary gear train 100 can include a carrier 112. The carrier 112 can be configured to support the one or more planetary gears 106.

In an aspect, the first internally toothed gear 104 can be configured to remain stationary in response to a rotation of the sun gear 102, while the second internally toothed gear 202 can be configured to rotate in response to the rotation of the sun gear 102.

Alternatively, the first internally toothed gear 104 can be configured to rotate in response to the rotation of the sun gear 102, while the second internally toothed gear 202 can be configured to remain stationary in response to the rotation of the sun gear 102.

Advantageously, a planetary gear train, with one or more gears of one or more planetary gears engaged with a stationary internally toothed gear and a rotatable internally toothed gear, that occupies a given size of space can produce a speed conversion ratio (a torque conversion ratio) that can be significantly smaller (larger) than a speed conversion ratio (a torque conversion ratio) produced by a gear train, with a different configuration, that occupies the same given size of space.

For example, for the planetary gear train 100 where: (1) a number of teeth of the sun gear can be $t_{sun}$, (2) a number of teeth of one of the one or more first gears 110 can be $t_{p1}$, (3) a number of teeth of one of the one or more second gears 204 can be $t_{p2}$, (4) a number of teeth of the first internally toothed gear 104 can be $t_{i1}$, and (5) a number of teeth of the second internally toothed gear 202 can be $t_{i2}$, the speed conversion ratio ($N_{out}/N_{in}$) can be:

$$N_{out}/N_{in} = [(\{t_{i2} - [(t_{i1}/t_{p1}) \times t_{p2}]\}/t_{i2}) \times (t_s/t_{p1})]$$

In an aspect, the number of teeth of one of the one or more first gears 110 ($t_{p1}$) can be fewer than the number of teeth of one of the one or more second gears 204 ($t_{p2}$). Alternatively, the number of teeth of the one of the one or more first gears 110 ($t_{p1}$) can be more than the number of teeth of the one of the one or more second gears 204 ($t_{p2}$).

In an aspect, the number of teeth of the first internally toothed gear 104 ($t_{i1}$) can be fewer than the number of teeth of the second internally toothed gear 202 ($t_{i2}$). Alternatively, the number of teeth of the first internally toothed gear 104 ($t_{i1}$) can be more than the number of teeth of the second internally toothed gear 202 ($t_{i2}$).

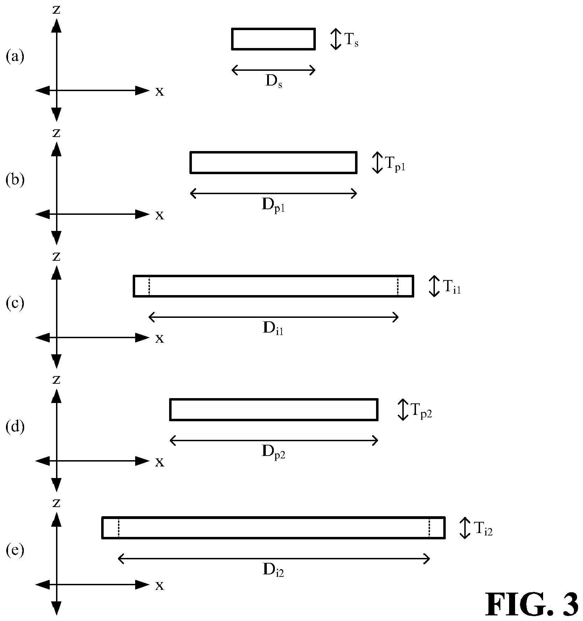

FIG. 3 includes diagrams illustrating side views of gears included in the example of the planetary gear train 100. A view (a) illustrates a side view of the sun gear 102. A view (b) illustrates a side view of one of the first gears 110 of the one or more compound gears 108 of the one or more planetary gears 106. A view (c) illustrates a side view of the first internally toothed gear 104. A view (d) illustrates a side view of one of the second gears 204 of the one or more compound gears 108 of the one or more planetary gears 106. A view (e) illustrates a side view of the second internally toothed gear 202. With reference to FIGS. 1 through 3: (1) the sun gear 102 can have a thickness ($T_s$) and an average diameter ($D_s$) of a circumference of the sun gear 102 having teeth; (2) the one of the first gears 110 can have a thickness ($T_{p1}$) and an average diameter ($D_{p1}$) of a circumference of the one of the first gears 110 having teeth; (3) the first internally toothed gear 104 can have a thickness ($T_{i1}$) and an average diameter ($D_{i1}$) of a circumference of the first internally toothed gear 104 having teeth; (4) the one of the second gears 204 can have a thickness ($T_{p2)}$) and an average diameter ($D_{p2}$) of a circumference of the one of the second gears 204 having teeth; and (5) the second internally toothed gear 202 can have a thickness ($T_{i2}$) and an average diameter ($D_{i2}$) of a circumference of the second internally toothed gear 202 having teeth.

In an aspect, an average diameter, of a circumference having teeth, of the one of the one or more first gears 110 ($D_{p1}$) can be smaller than an average diameter, of a circumference having teeth, of the one of the one or more second gears 204 ($D_{p2}$). Alternatively, the average diameter, of the circumference having teeth, of the one of the one or more first gears 110 ($D_{p1}$) can be larger than the average diameter, of the circumference having teeth, of the one of the one or more second gears 204 ($D_{p2}$).

In an aspect, an average diameter, of a circumference having teeth, of the first internally toothed gear 104 ($D_{i1}$) can be smaller than an average diameter, of a circumference having teeth, of the second internally toothed gear 202 ($D_{i2}$). Alternatively, the average diameter, of the circumference having teeth, of the first internally toothed gear 104 ($D_{i1}$) can be larger than the average diameter, of the circumference having teeth, of the second internally toothed gear 202 ($D_{i2}$).

Advantageously, a planetary gear train having: (1) a sun gear of a first given thickness and a first given average diameter, (2) a first internally toothed gear of a second given thickness and a second given average diameter, (3) a second internally toothed gear of a third given thickness and a third given average diameter, (4) a first gear, of one of one or more compound gears or one or more planetary gears, of a fourth given thickness and a fourth given average diameter, and (5) a second gear, of the one of the one or more compound gears of the one or more planetary gears, of a fifth given thickness and a fifth given average diameter, in which: (1) teeth of the first gear are directly meshed with teeth of the first internally toothed gear and (2) teeth of the second gear are directly meshed with teeth of the second internally toothed gear, can occupy a size of space that is less than a size of space occupied by a planetary gear train with a different configuration to achieve the same gear ratio.

For example, a planetary gear train having: (1) a sun gear of a first given thickness and a first given average diameter, (2) a first internally toothed gear of a second given thickness and a second given average diameter, (3) a second internally toothed gear of a third given thickness and a third given average diameter, (4) a first gear, of one of one or more compound gears or one or more planetary gears, of a fourth given thickness and a fourth given average diameter, and (5) a second gear, of the one of the one or more compound gears of the one or more planetary gears, of a fifth given thickness and a fifth given average diameter, in which: (1) teeth of the first gear are directly meshed with teeth of the first internally toothed gear and (2) teeth of the second gear are directly meshed with teeth of the second internally toothed gear, can occupy a size of space that is less than a size of space occupied by a planetary gear train having: (1) a sun gear of the first given thickness and the first given average diameter, (2) a first internally toothed gear of the second given thickness and the second given average diameter, (3) a second internally toothed gear of the third given thickness and the third given average diameter, (4) a first gear, of one of one or more compound gears or one or more planetary gears, of the fourth given thickness and the fourth given average diameter, and (5) a second gear, of the one of the one or more compound gears of the one or more planetary gears, of the fifth given thickness and the fifth given average diameter, in which: (1) teeth of the first gear are not directly meshed with teeth of the first internally toothed gear or with teeth of the second internally toothed gear and (2) teeth of the second gear are directly meshed with teeth of the first internally toothed gear and with teeth of the second internally toothed gear.

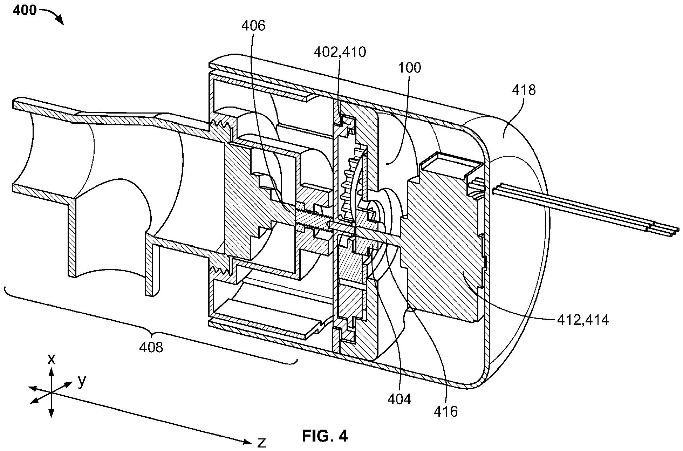

FIG. 4 is a diagram illustrating a perspective view of an example of a valve actuation system 400 according to the disclosed subject matter. The valve actuation system 400 can include the planetary gear train 100, a first coupling 402, and a second coupling 404. The first coupling 402 can be connected to the second internally toothed gear 202 and can be configured to be connected to a stem 406 of a valve 408. Optionally, the first coupling 402 can include a second mechanism 410. The second mechanism 410 can be configured to be coupled to the stem 406 of the valve 408. The second mechanism 410 can be configured to convert the rotational motion to a linear motion. The linear motion can be applied to the stem 408 of the valve 408. For example, the second mechanism 410 can be a screw, a lead screw, a linkage, a rack and pinion actuator, a prismatic joint, a cam follower, the like, or any combination of the foregoing. The second coupling 404 can be connected to the sun gear 102 and can be configured to be connected to a first mechanism 412. The first mechanism 412 can configured to convert energy into a rotational motion. For example, the first mechanism 412 can be a motor 414. For example, the second coupling 404 can be connected to a shaft 416 of the motor 414. Optionally, the valve actuation system 400 can include a housing 418. The planetary gear train 100 can be disposed within the housing 418. Optionally, the valve actuation system 400 can include the first mechanism 412. The first mechanism 412 can be disposed within the housing 418. The first mechanism 412 can be connected to the second coupling 404. If the first mechanism 412 is the motor 414, the motor 414 can be a low torque motor, an alternating current motor, a direct current motor, the like, or any combination thereof. Optionally, the valve actuation system 400 can include the valve 408. The stem 406 of the valve 408 can be connected to the first coupling 402. Optionally, if the first coupling 402 includes the second mechanism 410, then the stem 406 of the valve 408 can be connected to the second mechanism 410. The valve 408 can be configured to throttle flow. For example, the valve 408 can be a thermostatic radiator valve (TRV).

In an aspect, the first mechanism 412 (e.g., the motor 414) can be used to control the position of the valve 408. The shaft 416 of the first mechanism 412 can be connected to the second coupling 404. The second coupling 404 can be connected to the sun gear 102. The sun gear 102 can be engaged with the one or more planetary gears 106. The one or more planetary gears 106 can be one or more compound gears 108. The one or more compound gears 108 can include one or more first gears 110 and one or more second gears 204. The one or more first gears 110 can be engaged with the sun gear 102 and with the first internally toothed gear 104. The one or more second gears 204 can be engaged with the second internally toothed gear 202. The first coupling 402 can be connected to the stem 406 of the valve 408. Optionally, the first coupling 402 can include the second mechanism 410. The second mechanism 410 can be configured to convert the rotational motion, produced by the first mechanism 412, to a linear motion to move the stem 406 of the valve 408.

In an aspect, the second internally toothed gear 202 can be connected to the first coupling 402 and the first internally toothed gear 104 can be configured to remain stationary in response to a rotation of the sun gear 102, while the second internally toothed gear 202 can be configured to rotate in response to the rotation of the sun gear 102. A rotation of the shaft 416 of the first mechanism 412 can be transferred, via the second coupling 404, to the sun gear 102. Because the sun gear 102 can be engaged with the one or more first gears 110 and because the first internally toothed gear 104 can be configured to remain stationary in response to the rotation of the sun gear 102, the one or more first gears 110 can be configured to revolve around the sun gear 102 in response to the rotation of the sun gear 102. Because the one or more first gears 110 can be engaged with the sun gear 102 and with the first internally toothed gear 104, the one or more first gears 110 can be configured to rotate as the one or more first gears 110 revolve around the sun gear 102. Because the one or more first gears 110 and the one or more second gears 114 can be one or more compound gears 110, a rotation of the one or more first gears 112 can be transferred to the one or more second gears 114. Because the one or more second gears 204 can be engaged with the second internally toothed gear 202 and because the second internally toothed gear 202 can be configured to rotate in response to the rotation of the sun gear 102, the second internally toothed gear 202 can be configured to rotate in response to the rotation of the one or more second gears 204. A rotation of the second internally toothed gear 202 can be transferred, via the first coupling 402, to the stem 406 of the valve 408. A rotation of the stem 406 can change the position of the valve 408. Optionally, if the first coupling 402 includes the second mechanism 410, then the rotation of the second internally toothed gear 202 can be converted, via the second mechanism 410, to a linear motion to move the stem 406 of the valve 408. The linear motion of the stem 406 can change the position of the valve 408. In this manner, the planetary gear train 100 can be used to convert a high speed and a low torque produced by the first mechanism 412 (e.g., the motor 414) to a low speed and a high torque applied to the stem 406 or the second mechanism 410.

Alternatively, the first internally toothed gear 104 can be connected to the first coupling 402 and the second internally toothed gear 202 can be configured to remain stationary in response to the rotation of the sun gear 102, while the first internally toothed gear 104 can be configured to rotate in response to the rotation of the sun gear 102. A rotation of the shaft 416 of the first mechanism 412 can be transferred, via the second coupling 404, to the sun gear 102. Because the sun gear 102 can be engaged with the one or more first gears 110, because the one or more first gears 110 and the one or more second gears 204 can be one or more compound gears 108, and because the second internally toothed gear 202 can be configured to remain stationary in response to the rotation of the sun gear 102, the one or more second gears 204 can be configured to revolve around the sun gear 102 in response to the rotation of the sun gear 102. Because the one or more second gears 204 can be engaged with the sun gear 102 and with the second internally toothed gear 202, the one or more second gears 204 can be configured to rotate as the one or more second gears 204 revolve around the sun gear 102. Because the one or more second gears 204 and the one or more first gears 110 can be one or more compound gears 108, a rotation of the one or more second gears 204 can be transferred to the one or more first gears 110. Because the one or more first gears 110 can be engaged with the first internally toothed gear 104 and because the first internally toothed gear 104 can be configured to rotate in response to the rotation of the sun gear 102, the first internally toothed gear 104 can be configured to rotate in response to the rotation of the one or more first gears 110. The rotation of the first internally toothed gear 104 can be transferred, via the first coupling 402, to the stem 406 of the valve 408. The rotation of the stem 506 can change the position of the valve 508. Optionally, if the first coupling 402 includes the second mechanism 410, then the rotation of the first internally toothed gear 104 can be converted, via the second mechanism 410, to a linear motion to move the stem 406 of the valve 408. The linear motion of the stem 406 can change the position of the valve 408. In this manner, the planetary gear train 100 can be used to convert the high speed and the low torque produced by the first mechanism 412 (e.g., the motor 414) to a low speed and a high torque applied to the stem 406 or the second mechanism 410.

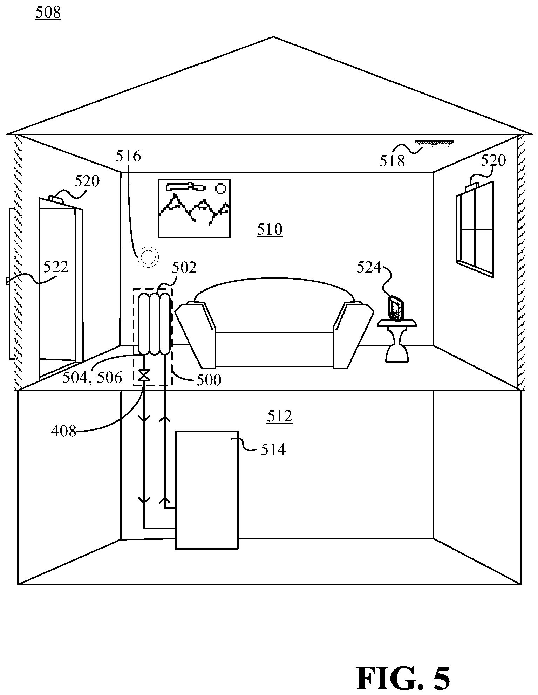

FIG. 5 is a diagram of an environment of an example configuration of a heat exchange system 500 according to the disclosed subject matter. The heat exchange system 500 can include a heat exchanger 502 and the valve 408. For example, the heat exchanger 502 can be a radiator. The valve 408 can be connected to a port 504 of the heat exchanger 502. The valve 408 can be included in the valve actuation system 400. The valve actuation system 400 can include the planetary gear train 100. In the example configuration illustrated in FIG. 5, the port 504 can be an output port 506 of the heat exchanger 502.

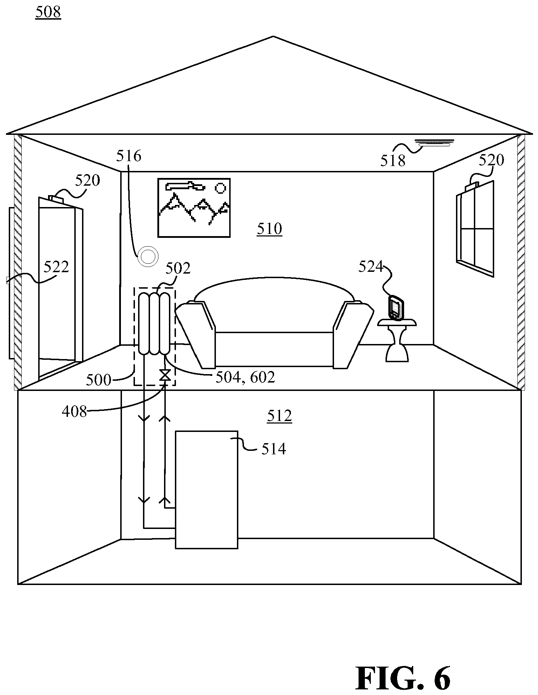

FIG. 6 is a diagram of an environment of another example configuration of the heat exchange system 500 according to the disclosed subject matter. In the example configuration illustrated in FIG. 6, the port 504 can be an input port 602 of the heat exchanger 502.

The heat exchange system 500 can be a component of a premises management system 508. For example, the premises management system 508 can be installed within premises that include a house 510 with a room 512 in which a heat generator 514 of a central heating system is installed. The premises management system 508 can implement subsystems, including a security system, via multiple types of premises management devices, such as one or more intelligent, multi-sensing, network-connected thermostats 516, one or more intelligent, multi-sensing, network-connected hazard detection units 518, one or more intelligent, multi-sensing, network-connected entry detection units 520, one or more network-connected door handles 522, one or more intelligent, multi-sensing, network-connected controller devices 524, or any combination thereof. Data from any of these premise management devices can be used by the security system, as well as for the respective primary functions of the premise management devices.

With respect to control of the heat exchange system 500, the premises management system 508 can use temperature, sensed by the network-connected thermostats 516, as feedback to control a rate at which heat is transferred by the heat exchanger 502. For example, the sensed temperature can be used to incrementally control the position of the valve 408 connected to the port 504 of the heat exchanger 502. The valve 408 can throttle flow of a fluid through the heat exchanger 502. In a premises management system 508 with more than one heat exchange system 500 and more than one network-connected thermostats 516, temperatures sensed by the network-connected thermostats 516 can be used as feedback to control the position of an individual valve 508 connected to the port 504 of a corresponding heat exchanger 502 of the more than one heat exchange systems 500.

At a high level, the premises management system 508 can be configured to operate as a learning, evolving ecosystem of interconnected devices. New premises management devices can be added, introducing new functionality, expanding existing functionality, or expanding a spatial range of coverage of the system. Furthermore, existing premises management devices can be replaced or removed without causing a failure of the premises management system 508. Such removal can encompass intentional or unintentional removal of components from the premises management system 508 by an authorized user, as well as removal by malfunction (e.g., loss of power, destruction by intruder, etc.). Due to the dynamic nature of the system, the overall capability, functionality and objectives of the premises management system 508 can change as the constitution and configuration of the premises management system 508 change.

In order to avoid contention and race conditions among the interconnected devices, certain decisions, such as those that affect the premises management system 508 at a system level or that involve data from multiple sources, can be centralized in the aforementioned "brain" component. The brain component can coordinate decision making across the premises management system 508 or across a designated portion thereof. The brain component is a system element at which, for example, sensor/detector states can converge, user interaction can be interpreted, sensor data can be received, and decisions can be made concerning the state, mode, or actions of the premises management system 508. Hereinafter, the premises management system 508 brain component can be referred to as the "primary system processor." The function of primary system processor can be implemented in the controller device 524, for example, hard coded into a single device, or distributed virtually among one or more premises management devices within the system using computational load sharing, time division, shared storage, or other techniques.

However implemented, the primary system processor can be configured to control subsystems and components of the premises management system 508, such as, for example, the disclosed heat exchange system 500 (as illustrated, for example, in FIG. 5 or FIG. 6), the disclosed security system and/or a smart home environment system. Furthermore, the primary system processor can be communicatively connected to control, receive data from, or transmit data to premises management devices within the system, as well as receive data from or transmit data to devices/systems external to the premises management system 508, such as third party servers, cloud servers, mobile devices, and the like.

In the embodiments disclosed herein, each of the premises management devices can include one or more sensors. In general, a "sensor" can refer to any device that can obtain information about its local environment and communicate that information in the form of data that can be stored or accessed by other devices and/or systems. Sensor data can form the basis of inferences drawn about the sensor's environment. For example, the primary system processor can use data from a plurality of sensors, e.g., including entry detection unit 520, to determine whether an unauthorized party is attempting enter the house 510 through a window.

A brief description of sensors that may be included in the premises management system 508 follows. Examples provided are not intended to be limiting but are merely provided as illustrative subjects. The premises management system 508 can use data from the types of sensors in order to implement features of a security system. The premises management system 508 can employ data from any type of sensor that provides data from which an inference can be drawn about the environment in or around the house 510.

Generally, sensors can be described by the type of information they collect. For example, sensor types can include motion, smoke, carbon monoxide, proximity, temperature, time, physical orientation, acceleration, location, entry, presence, pressure, light, sound, and the like. A sensor also can be described in terms of the particular physical device that obtains the environmental information. For example, an accelerometer can obtain acceleration information, and thus can be used as a general motion sensor and/or an acceleration sensor. A sensor also can be described in terms of the specific hardware components used to implement the sensor. For example, a temperature sensor can include a thermistor, thermocouple, resistance temperature detector, integrated circuit temperature detector, or combinations thereof.

A sensor further can be described in terms of a function or functions the sensor performs within the premises management system 508. For example, a sensor can be described as a security sensor when it is used to determine security events, such as unauthorized entry.

A sensor can be operated for different functions at different times. For example, premises management system 508 can use data from a motion sensor to determine how to control lighting in the house 510 when an authorized party is present and use the data as a factor to change a security system mode or state on the basis of unexpected movement when no authorized party is present. In another example, the premises management system 508 can use the motion sensor data differently when a security system mode is in an "away" mode versus a "home" state, i.e., certain motion sensor data can be ignored while the system is in a "home" mode and acted upon when the system is in an "away" mode.

In some cases, a sensor can operate as multiple sensor types sequentially or concurrently, such as where a temperature sensor is used to detect a change in temperature, as well as the presence of a person or animal. A sensor also can operate in different modes (e.g., different sensitivity or threshold settings) at the same or different times. For example, a sensor can be configured to operate in one mode during the day and another mode at night. As another example, a sensor can operate in different modes based upon a mode or the disclosed security system, state of premises management system 508, or as otherwise directed by the primary system processor.

Multiple sensors can be arranged in a single physical housing, such as where a single device includes movement, temperature, magnetic, and/or other sensors. Such a housing can also be referred to as a sensor, premises management device, or a sensor device. For clarity, sensors can be described with respect to the particular functions they perform and/or the particular physical hardware used.

A security system integrated in the premises management system 508 can include sensors, interface components, and one or more processing units that process data generated by the sensors and that control the interface components. Data from the sensors can be used to determine the occurrence of a security breach or security related event, such as entry through a window of the premises, lengthy presence of an individual in an unusual location and an unusual time, or tampering with a lock of a door of the premises, etc. Upon the occurrence of such an event, the security system can determine, based on any of various algorithms, that an alarm is warranted and enter into an alarm mode, which can include automatically notifying a third party monitoring service as well as operating components of the system to provide visual and/or audible alerts, such as a siren sound, repeated beeping sound, or flashing lights.

Additionally, the security system can determine where a security breach has occurred and thereafter track the location of the unauthorized party, as well as the locations of authorized parties within and/or around the premises. Additionally, in view of the high stress levels that can accompany experiencing an unauthorized intrusion, the security system can announce the location of the security breach and the location of the unauthorized party within the premises. In so doing the authorized occupants are automatically warned of which locations in/around the premises to avoid and the unauthorized party is simultaneously deterred from further advance due to the clear notice to the unauthorized party that he/she is being tracked. Alternatively, the location of the unauthorized party can be announced only to select devices so as to inform an authorized user while leaving the unauthorized party unaware that he/she is being tracked.

The security system can function as a subsystem of a smart facility network system and can incorporate a plurality of electrical and/or mechanical components, including intelligent, sensing, network-connected devices that can communicate with each other and/or can communicate with a central server or a cloud-computing system to provide any of a variety of security (and/or environment) management objectives in a home, office, building or the like. Such objectives, which can include, for example, managing alarms, notifying third parties of alarm situations, managing door locks, monitoring the premises, etc., herein are collectively referred to as "premises management."

The premises management system 508 can further include other subsystems that can communicate with each other to manage different aspects of premises management as well as security. For example, the security subsystem can manage the arming, disarming, and activation of alarms and other security aspects of the premises, and a smart home environment subsystem can handle aspects such as light, temperature, and hazard detection of the premises. However, the premises management system 508 can leverage data obtained in one subsystem to improve the functionality of another subsystem.

The security system can be operable to function in any of various modes or states. For example, security system modes can include "stay", "away" and "home" modes. In a "stay" mode the security system can operate under the assumption that authorized parties are present within the premises but will not be entering/leaving without notifying the system; therefore data from certain interior sensors can be given lower weight in determining whether an unauthorized party is present. In an "away" mode the security system can operate under the assumption that no authorized parties are in the premises; therefore data from all sensors, interior and exterior, can be accorded high weight in determining whether an unauthorized party is present. In a "home" mode the security system can operate under the assumption that authorized parties are within the premises and will be freely entering/leaving the premises without notifying the system; therefore data from certain sensors interior and exterior can be accorded low weight in determining whether an unauthorized party is present. It should be understood that these modes are merely examples and can be modified, removed, or supplemented by other modes.

Additionally, the security system can function in any of various alarm states. For example, in a "green" or "low" alarm state the security system can operate under the assumption that all is well and no unauthorized parties have been detected within/around the premises. In a "yellow" or "medium" alarm state the security system can operate under the assumption that an unauthorized party is potentially present in or around the premises. In this state certain sensor data can be analyzed differently or additional confirmations of authorization, such as entering a code, can be required of to avoid escalation to a higher alarm state. In a "red" or "high" alarm state the security system can operate under the assumption that an unauthorized party has been detected on the premises and preventive measures can be taken, such as notifying a third party monitoring service and/or activating an alarm and announcement, as will be described later. It should be understood that greater or fewer gradients of alarm state can be included. Hereinafter, a heightened alarm can refer to an alarm state above the low alarm state.

The security system can be implemented as a stand-alone system or, as mentioned above, as a subsystem of a larger premises management system and can leverage data therefrom. For illustrative purposes and to demonstrate the cross use of data among systems, the security system can be part of a premises management system, such as a smart home network environment.

The individual hardware components of the premises management system 508 that can be used to monitor and affect the premises in order to carry out premises management can be referred to as "premises management devices." The premises management devices described herein can include multiple physical hardware and firmware configurations, along with circuitry hardware (e.g., processors, memory, etc.), firmware, and software programming that are configured to carry out the methods and functions of a premises management system. The premises management devices can be controlled by a "brain" component, which can be implemented in a controller device.

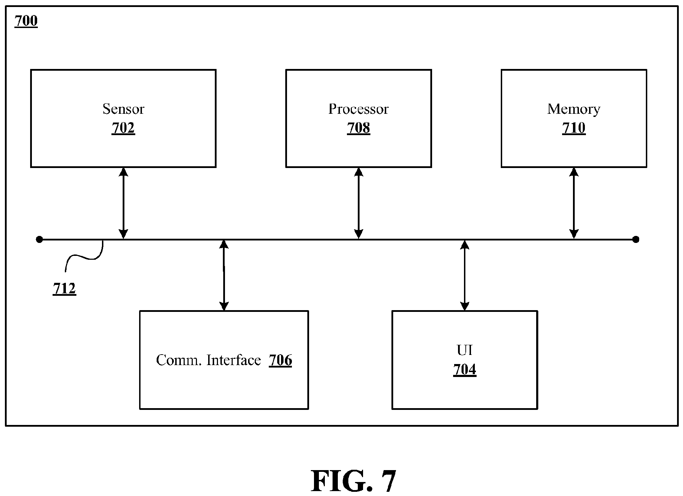

FIG. 7 is a block diagram of an example of a premises management device 700. Premise management device 700 can include a processor 708, a memory 710, a user interface (UI) 704, a communications interface 706, an internal bus 712, and a sensor 702. A person of ordinary skill in the art appreciates that various components of the premises management device 700 described herein can include additional electrical circuit(s). Furthermore, it is appreciated that many of the various components listed above can be implemented on one or more integrated circuit (IC) chips. For example, in one embodiment, a set of components can be implemented in a single IC chip. In other embodiments, one or more of respective components can be fabricated or implemented on separate IC chips.

The sensor 702 can be an environmental sensor, such as a temperature sensor, smoke sensor, carbon monoxide sensor, motion sensor, accelerometer, proximity sensor, passive infrared (PIR) sensor, magnetic field sensor, radio frequency (RF) sensor, light sensor, humidity sensor, pressure sensor, microphone, compass, or any other environmental sensor that obtains or provides a corresponding type of information about the environment in which the premises management device 700 is located.

The processor 708 can be a central processing unit (CPU) or other type of processor and can be communicably connected to the other components to receive and analyze data obtained by the sensor 702, can transmit messages or packets that control operation of other components of the premises management device 700 and/or external devices, and can process communications between the premises management device 700 and other devices. The processor 708 can execute instructions and/or computer executable components stored on the memory 710. Such computer executable components can include, for example, a primary function component to control a primary function of the premises management device 700 related to managing a premises, a communication component to locate and communicate with other compatible premises management devices, a computational component to process system related tasks, or any combination thereof.

The memory 710 or another memory in the premises management device 700 can also be communicably connected to receive and store environmental data obtained by the sensor 702. A communication interface 706 can function to transmit and receive data using a wireless protocol, such as a WiFi™, Thread®, or other wireless interface, Ethernet® or other local network interface, Bluetooth® or other radio interface, or the like and can facilitate transmission and receipt of data by the premises management device 700 to and from other devices.

The user interface (UI) 704 can provide information and/or receive input from a user of the premises management system 508. The UI 704 can include, for example, a speaker to output an audible sound when an event is detected by the premises management device 700. Alternatively or additionally, the UI 704 can include a light to be activated when an event is detected by the premises management device 700. The UI 704 can be relatively minimal, such as a liquid crystal display (LCD), light-emitting diode (LED) display, or limited-output display, or it can be a full-featured interface such as a touchscreen, keypad, or selection wheel with a click-button mechanism to enter input.

Internal components of the premises management device 700 can transmit and receive data to and from one another via an internal bus 712 or other mechanism. One or more components can be implemented in a single physical arrangement, such as where multiple components are implemented on a single integrated circuit. Premises management devices 700 can include other components, and/or may not include all of the components illustrated.

The sensor 702 can obtain data about the premises, and at least some of the data can be used to implement the security system. Through the bus 712 and/or communication interface 706, sensor data can be transmitted to or accessible by other components of the premises management system 508. Generally, two or more sensors 702 on one or more premises management devices 700 can generate data that can be coordinated by the primary system processor to determine a system response and/or infer a state of the environment. In one example, the primary system processor of the premises management system 508 can infer a state of intrusion based on data from entry detection sensors and motion sensors and, based on the determined state, further determine whether an unauthorized party is present and a location, within the premises, of the unauthorized party.

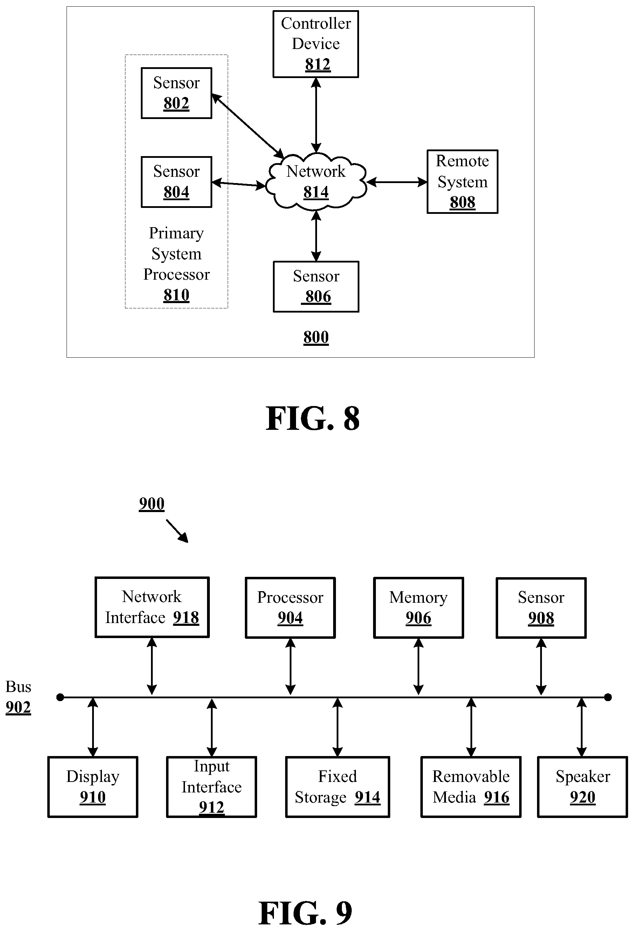

FIG. 8 is a block diagram of an example of a premises management system 800. The premises management system 800 can include security system features. System 800 can be implemented over any suitable wired and/or wireless communication networks. One or more premises management devices, i.e., sensors 802, 804, 806, and one or more controller devices 812 can communicate via a local network 814, such as a WiFi™ or other suitable network, with each other. The network 814 can include a mesh-type network such as Thread®, which can provide network architecture and/or protocols for devices to communicate with one another. An authorized party can therefore interact with the premises management system 800, for example, using the controller device 812, which can communicate with the rest of the system 800 via the network 814.

The controller device 812 and/or one or more of the sensors 802, 804, 806, can be configured to implement a primary system processor 810. The primary system processor 810 can, for example, receive, aggregate, and/or analyze environmental information received from the sensors 802, 804, 806, and the controller device 812. Furthermore, a portion or percentage of the primary system processor 810 can be implemented in a remote system 808, such as a cloud-based reporting and/or analysis system. The remote system 808 can, for example, independently aggregate data from multiple locations, provide instruction, software updates, and/or aggregated data to a controller 812, primary system processor 810, and/or sensors 802, 804, 806.

The sensors 802, 804, 806, can be disposed locally to one another, such as within a single dwelling, office space, building, room, or the like, or they may be disposed remote from each other, such as at various locations around a wide perimeter of a premises. In some embodiments, sensors 802, 804, 806, can communicate directly with one or more remote systems 808. The remote system 808 can, for example, aggregate data from multiple locations, provide instruction, software updates, and/or aggregated data to the primary system processor 810, controller device 812, and/or sensors 802, 804, 806. Additionally, remote system 808 can refer to a system or subsystem that is a part of a third party monitoring service or a law enforcement service.

The premises management system illustrated in FIG. 8 can be a part of a smart-home environment, which can include a structure, such as a house, office building, garage, mobile home, or the like. The devices of the smart home environment, such as the sensors 802, 804, 806, and the network 814 can be integrated into a smart-home environment that does not include an entire structure, such as a single unit in an apartment building, condominium building, or office building. The devices of the smart home environment, such as the sensors 802, 804, 806, and the network 814 can also be integrated into a smart-home environment in other types of dwellings, such as row houses, flats, terraced homes, or townhomes. Outside input to a thermostatic radiator valve (TRV) (e.g., the valve 408) can also be used to manage periods of peak demand in a district heating system by throttling flow of fluid through a heat exchanger (e.g., the heat exchanger 502) in a manner that reduces consumption of fuel during the periods of peak demand.

The smart home environment can control and/or be coupled to devices outside of the structure. For example, one or more of the sensors 802, 804 can be located outside the structure at one or more distances from the structure (e.g., sensors 802, 804 can be disposed outside the structure, at points along a land perimeter on which the structure is located, or the like. One or more of the devices in the smart home environment may not be physically within the structure. For example, the controller 812, which can receive input from the sensors 802, 804, can be located outside of the structure.

The structure of the smart-home environment can include a plurality of rooms, separated at least partly from each other via walls. The walls can include interior walls or exterior walls. Each room can further include a floor and a ceiling. Devices of the smart-home environment, such as the sensors 802, 804, can be mounted on, integrated with, and/or supported by a wall, floor, or ceiling of the structure.

The controller device 812 can be a general or special-purpose controller. For example, one type of controller device 812 can be a general-purpose computing device running one or more applications that collect and analyze data from one or more sensors 802, 804, 806 within the home. In this case, the controller device 812 can be implemented using, for example, a mobile computing device such as a mobile phone, a tablet computer, a laptop computer, a personal data assistant, or wearable technology. Another example of a controller device 812 can be a special-purpose controller that is dedicated to a subset of functions, such as a security controller that collects, analyzes and provides access to sensor data primarily or exclusively as it relates to various security considerations for a premises. The controller device 812 can be located locally with respect to the sensors 802, 804, 806 with which it can communicate and from which it can obtain sensor data, such as in the case where it is positioned within a home that includes a home automation and/or sensor network. Alternatively or additionally, controller device 812 can be remote from the sensors 802, 804, 806, such as where the controller device 812 is implemented as a cloud-based system that can communicate with multiple sensors 802, 804, 806, which can be located at multiple locations and can be local or remote with respect to one another.

Sensors 802, 804, 806 can communicate with each other, the controller device 812, and the primary system processor 810 within a private, secure, local communication network that can be implemented wired or wirelessly, and/or a sensor-specific network through which sensors 802, 804, 806 can communicate with one another and/or with dedicated other devices. Alternatively, as illustrated in FIG. 8, one or more sensors 802, 804, 806 can communicate via a common local network 814, such as a Wi-Fi™, Thread®, or other suitable network, with each other, and/or with the controller 812 and primary system processor 810. Alternatively or additionally, sensors 802, 804, 806 can communicate directly with a remote system 808.

The smart-home environment, including the sensor network shown in FIG. 8, can include a plurality of premises management devices, including intelligent, multi-sensing, network-connected devices that can integrate seamlessly with each other and/or with a central server or a cloud-computing system (e.g., controller 812 and/or remote system 808) to provide home-security and smart-home features. Such devices can include one or more intelligent, multi-sensing, network-connected thermostats (e.g., "smart thermostats"), one or more intelligent, network-connected, multi-sensing hazard detection units (e.g., "smart hazard detectors"), one or more intelligent, multi-sensing, network-connected entryway interface devices (e.g., "smart doorbells"), or any combination thereof. The smart hazard detectors, smart thermostats, and smart doorbells can be, for example, the sensors 802, 804, 806 illustrated in FIG. 8. These premises management devices can be used by the security system, but can also have separate, primary functions.

For example, a smart thermostat can detect ambient climate characteristics (e.g., temperature and/or humidity) and can accordingly control a heating, ventilating, and air conditioning (HVAC) system of the structure and/or the heat exchange system 500 (as illustrated, for example, in FIG. 5 or FIG. 6). For example, the ambient climate characteristics can be detected by sensors 802, 804, 806 illustrated in FIG. 8, and the controller 812 can control the HVAC system (not illustrated) of the structure. However, unusual changes in temperature of a given room can also provide data that can supplement a determination of whether a situation is a security concern, for example, detecting a rapid drop in temperature in a given room due to a broken in window.

As another example, a smart hazard detector can detect the presence of a hazardous substance or a substance indicative of a hazardous substance (e.g., smoke, fire, or carbon monoxide). For example, smoke, fire, and/or carbon monoxide can be detected by sensors 802, 804, 806 illustrated in FIG. 8, and the controller 812 can control an alarm system to provide a visual and/or audible alarm to the user of the smart-home environment. However, the speaker of the hazard detector can also be used to announce security related messages.

As another example, a smart doorbell can control doorbell functionality, detect a person's approach to or departure from a location (e.g., an outer door to the structure), and announce a person's approach or departure from the structure via an audible and/or visual message that can be output by a speaker and/or a display coupled to, for example, the controller 812. However, the detection of an approach of an unknown party can provide data to the security system to supplement determining whether the presence of the unknown party is a security concern.

A smart-home environment can include one or more intelligent, multi-sensing, network-connected entry detectors (e.g., "smart entry detectors") that can be specifically designed to function as part of a security subsystem. Such detectors can be or can include one or more of the sensors 802, 804, 806 illustrated in FIG. 8. The smart entry detectors can be disposed at one or more windows, doors, and other entry points of the smart-home environment to detect when a window, door, or other entry point is opened, broken, breached, and/or compromised. The smart entry detectors can generate a corresponding signal to be provided to the controller 812, primary system processor 810, and/or the remote system 808 when a window or door is opened, closed, breached, and/or compromised. In some embodiments of the security system, the alarm, which can be included with controller 812 and/or coupled to the network 814, may not arm unless all smart entry detectors (e.g., sensors 802, 804, 806) indicate that all doors, windows, entryways, and the like are closed and/or that all smart entry detectors are armed.

The smart thermostats, the smart hazard detectors, the smart doorbells, the smart entry detectors, and other premise management devices of a smart-home environment (e.g., as illustrated as sensors 802, 804, 806 of FIG. 8) can be communicatively connected to each other via the network 814, and to the controller 812, primary system processor 810, and/or remote system 808.

One or more users can control one or more of the network-connected smart devices in the smart-home environment using a network-connected computer or portable electronic device. In some examples, some or all of the users (e.g., individuals who live in the home) can register their mobile device, token and/or key fobs with the smart-home environment (e.g., with the controller 812). Such registration can be made at a central server (e.g., the controller 812 and/or the remote system 808) to authenticate the user and/or the electronic device as being associated with the smart-home environment, and to provide permission to the user to use the electronic device to control the network-connected smart devices and the security system of the smart-home environment. A user can use their registered electronic device to remotely control the network-connected smart devices and security system of the smart-home environment, such as when the occupant is at work or on vacation. The user can also use their registered electronic device to control the network-connected smart devices when the user is located inside the smart-home environment.

As an alternative to or in addition to registering electronic devices, the smart-home environment can make inferences about which individuals live in the home and are therefore users and which electronic devices are associated with those individuals. As such, the smart-home environment can "learn" who is a user (e.g., an authorized user) and permit the electronic devices associated with those individuals to control the network-connected smart devices of the smart-home environment (e.g., devices communicatively coupled to the network 814) including, in some embodiments, sensors used by or within the smart-home environment. Various types of notices and other information can be provided to users via messages sent to one or more user electronic devices. For example, the messages can be sent via e-mail, short message service (SMS), multimedia messaging service (MMS), unstructured supplementary service data (USSD), as well as any other type of messaging services and/or communication protocols.

FIG. 9 is a block diagram of an example of a computing device 900 suitable for implementing certain devices illustrated in FIGS. 5 through 8. The computing device 900 can be used to implement, for example, the controller device 812 or a premises management device including sensors as described above. The computing device 900 can be constructed as a custom-designed device or can be, for example, a special-purpose desktop computer, laptop computer, or mobile computing device such as a smart phone, tablet, personal data assistant, wearable technology, or the like.

The computing device 900 can include a bus 902 that interconnects major components of the computing device 900. Such components can include a central processor 904; a memory 906 (such as Random Access Memory (RAM), Read-Only Memory (ROM), flash RAM, or the like), a sensor 908 (which can include one or more sensors), a display 910 (such as a display screen), an input interface 912 (which can include one or more input devices such as a keyboard, mouse, keypad, touch pad, turn-wheel, and the like), a fixed storage 914 (such as a hard drive, flash storage, and the like), a removable media component 916 (operable to control and receive a solid-state memory device, an optical disk, a flash drive, and the like), a network interface 918 (operable to communicate with one or more remote devices via a suitable network connection), and a speaker 920 (to output an audible communication). In some embodiments the input interface 912 and the display 910 can be combined, such as in the form of a touch screen.

The bus 902 can allow data communication between the central processor 904 and one or more memory components 914, 916, which can include RAM, ROM, or other memory. Applications resident with the computing device 900 generally can be stored on and accessed via a computer readable storage medium.

The fixed storage 914 can be integral with the computing device 900 or can be separate and accessed through other interfaces. The network interface 918 can provide a direct connection to the premises management system and/or a remote server via a wired or wireless connection. The network interface 918 can provide such connection using any suitable technique and protocol, including digital cellular telephone, WiFi™, Thread®, Bluetooth®, near field communications (NFC), and the like. For example, the network interface 918 can allow the computing device 900 to communicate with other components of the premises management system or other computers via one or more local, wide-area, or other communication networks.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

**Claims**

1. A planetary gear train (100), comprising:

   a sun gear (102);
   a first internally toothed gear (104);
   a second internally toothed gear (202); and
   at least one planetary gear (106), the at least one planetary gear (106) being at least one compound gear (108), the at least one compound gear (108) having at least one first gear (110) and at least one second gear (204), teeth of the at least one first gear (110) directly meshed with teeth of the sun gear (102) and with teeth of the first internally toothed gear (104), teeth of the at least one second gear (204) directly meshed with teeth of the second internally toothed gear (202).

2. The planetary gear train (100) of claim 1, wherein the at least one planetary gear (106) comprises at least three planetary gears (106-a, 106-b, 106-c).

3. The planetary gear train (100) of claim 1 or claim 2, further comprising a carrier (112) configured to support the at least one planetary gear (106).

4. The planetary gear train (100) of any one of claims 1 to 3, wherein:

> the first internally toothed gear (104) is configured to remain stationary in response to a rotation of the sun gear (102); and
>
> the second internally toothed gear (202) is configured to rotate in response to the rotation of the sun gear (102).

5. The planetary gear train (100) of any one of claims 1 to 3, wherein:

> the first internally toothed gear (104) is configured to rotate in response to a rotation of the sun gear (102); and
>
> the second internally toothed gear (202) is configured to remain stationary in response to the rotation of the sun gear (102).

6. The planetary gear train (100) of any one of claims 1 to 5, wherein a number of the teeth of the at least one second gear (204) is more than a number of the teeth of the at least one first gear (110).

7. The planetary gear train (100) of any one of claims 1 to 5, wherein a number of the teeth of the at least one first gear (110) is more than a number of the teeth of the at least one second gear (204).

8. The planetary gear train (100) of any one of claims 1 to 7, wherein a number of the teeth of the second internally toothed gear (202) is more than a number of the teeth of the at least one first internally toothed gear (104).

9. The planetary gear train (100) of any one of claims 1 to 7, wherein a number of the teeth of the first internally toothed gear (104) is more than a number of the teeth of the at least one second internally toothed gear (202).

10. A valve actuation system (400), comprising:

> the planetary gear train (100) of any one of claims 1 to 9;
>
> a first coupling (402) connected to the second internally toothed gear (202) and configured to be connected to a stem (406) of a valve (408); and
>
> a second coupling (404) connected to the sun gear (102) and configured to be connected to a first mechanism (412), the first mechanism (412) configured to convert energy into a rotational motion.

11. The valve actuation system (400) of claim 10, wherein the first coupling (402) includes a second mechanism (410), the second mechanism (410) configured to convert the rotational motion to a linear motion, the second mechanism (410) comprising at least one of a screw, a lead screw, a linkage, a rack and pinion actuator, a prismatic joint, or a cam follower.

12. The valve actuation system (400) of claim 10 or claim 11, further comprising:

> a housing (418), wherein the planetary gear train (100) is disposed within the housing (418); and
>
> the first mechanism (412), the first mechanism (412) disposed within the housing (418), the first mechanism (412) connected to the second coupling (404), the first mechanism (412) comprising at least one of a low torque motor, an alternating current motor, or a direct current motor.

13. The valve actuation system (400) of any one of claims 10 to 12, further comprising the valve (408), the stem (406) of the valve (408) connected to the first coupling (402).

14. The valve actuation system (400) of claim 13, wherein the valve (408) is configured to throttle flow.

15. A heat exchange system (500), comprising:

> a heat exchanger (502); and
>
> the valve actuation system (400) of claim 13 or claim 14, wherein the valve (408) is connected to a port (504) of the heat exchanger (502), the port (504) being one of an output port (506) of the heat exchanger (502) or an input port (602) of the heat exchanger (502).

FIG. 1

100

$D_{i2}$

106, 108, 204, 106-a

106, 108, 204, 106-c

202

106, 108, 204, 106-b

y

$D_{p2}$

x

**FIG. 2**

**FIG. 3**

FIG. 4

**FIG. 5**

FIG. 6

**700**

Sensor
**702**

Processor
**708**

Memory
**710**

**712**

Comm. Interface  **706**

UI
**704**

# FIG. 7

Controller
Device
**812**

Sensor
**802**

Sensor
**804**

Network
**814**

Remote
System
**808**

Primary
System
Processor
**810**

Sensor
**806**

**800**

# FIG. 8

**900**

Network
Interface **918**

Processor
**904**

Memory
**906**

Sensor
**908**

Bus
**902**

Display
**910**

Input
Interface
**912**

Fixed
Storage **914**

Removable
Media **916**

Speaker
**920**

# FIG. 9

**EUROPEAN SEARCH REPORT**

Europäisches Patentamt
European Patent Office
Office européen des brevets

Application Number

EP 17 15 3237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 195 25 831 A1 (ZAHNRADFABRIK FRIEDRICHSHAFEN [DE]) 16 January 1997 (1997-01-16) * figure 1 * | 1-9 | INV. F16H57/08 F16H1/28 |
| X | US 4 850 247 A (YU DAVID [US]) 25 July 1989 (1989-07-25) * figure 1 * | 1-9 | |
| X | US 4 043 226 A (BUUCK DENNIS L) 23 August 1977 (1977-08-23) * figures 1,9 * | 1-9 | |
| X | DE 10 2004 061817 A1 (BOSCH GMBH ROBERT [DE]) 6 July 2006 (2006-07-06) * figure 5 * | 1-9 | |

TECHNICAL FIELDS SEARCHED (IPC)

F16H

~~The present search report has been drawn up for all claims~~

| Place of search | Date of completion of the search | Examiner |
|---|---|---|
| Munich | 11 July 2017 | Szodfridt, Tamas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

Application Number

EP 17 15 3237

The Search Division considers that the present European patent application does not comply with the requirements of unity of invention and relates to several inventions or groups of inventions, namely:

```
1. claims: 1-9

        a planetary gear train
                       ---

2. claims: 10-14

        a valve actuation system
                       ---

3. claim: 15

        a heat exchange system
                       ---
```

## ANNEX TO THE EUROPEAN SEARCH REPORT
## ON EUROPEAN PATENT APPLICATION NO.

EP 17 15 3237

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2017

| Patent document cited in search report | Publication date | Patent family member(s) | Publication date |
|---|---|---|---|
| DE 19525831 A1 | 16-01-1997 | DE 19525831 A1<br>DE 59604785 D1<br>EP 0839293 A1<br>JP H11509299 A<br>US 5957804 A<br>WO 9704249 A1 | 16-01-1997<br>27-04-2000<br>06-05-1998<br>17-08-1999<br>28-09-1999<br>06-02-1997 |
| US 4850247 A | 25-07-1989 | NONE | |
| US 4043226 A | 23-08-1977 | NONE | |
| DE 102004061817 A1 | 06-07-2006 | DE 102004061817 A1<br>WO 2006066985 A1 | 06-07-2006<br>29-06-2006 |

EPO FORM P0459

For more details about this annex : see Official Journal of the European Patent Office, No. 12/82

**EP 3 354 938 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 8132013 A